Europäisches Patentamt

European Patent Office

Office européen des brevets

(19)

(11) Veröffentlichungsnummer : **0 112 493**
**B1**

(12) # EUROPÄISCHE PATENTSCHRIFT

(45) Veröffentlichungstag der Patentschrift :
04.03.87

(21) Anmeldenummer : 83111590.2

(22) Anmeldetag : 19.11.83

(51) Int. Cl.⁴ : **G 08 B 13/24, G 06 K 19/08**

(54) **Vorrichtung zur Aktivierung und/oder Deaktivierung eines magnetisierbare Schichten enthaltenden Sicherungsstreifens.**

(30) Priorität : 01.12.82 DE 3244431

(43) Veröffentlichungstag der Anmeldung :
04.07.84 Patentblatt 84/27

(45) Bekanntmachung des Hinweises auf die Patenterteilung : 04.03.87 Patentblatt 87/10

(84) Benannte Vertragsstaaten :
DE FR GB IT SE

(56) Entgegenhaltungen :
DE-A- 2 834 050
DE-A- 2 844 242
DE-A- 2 931 932
DE-A- 3 015 811
US-A- 4 158 434

(73) Patentinhaber : Rheinmetall GmbH
Ulmenstrasse 125 Postfach 6609
D-4000 Düsseldorf (DE)

(72) Erfinder : Klinkhardt, Erhard
Helmholtzstrasse 6
D-4040 Neuss 1 (DE)

(74) Vertreter : Behrens, Ralf Holger, Dipl.-Phys.
in Firma Rheinmetall GmbH Ulmenstrasse 125 Postfach 6609
D-4000 Düsseldorf 1 (DE)

EP 0 112 493 B1

Jouve, 18, rue St-Denis, 75001 Paris, France

## Beschreibung

Die Erfindung betrifft eine Vorrichtung zur Aktivierung und/oder. Deaktivierung eines magnetisierbare Schichten enthaltenden Sicherungsstreifens.

Ein magnetisierbare Bestandteile enthaltender Sicherungsstreifen, der in Sicherungseinrichtungen zur Verhinderung von Ladendiebstählen Anwendung findet, ist beispielsweise aus der DE-OS 29 31 932 bekannt. Dem magnetisierbaren Bestandteil eines solchen Sicherungsstreifens können beispielsweise reversibel Eigenschaften aufgeprägt werden, die charakteristisch für eine noch nicht bezahlte Ware oder für eine ordnungsgemäß bezahlte und verbuchte Ware sind. Die erstgenannte Eigenschaft entspricht dabei einem sogenannten « aktiven » Sicherungsstreifen, der nach Passieren einer Sicherungszone einen Alarm auslösen würde. Die magnetisierbaren Bestandteile des Sicherungsstreifens sind in der Regel für den Kunden nicht sichtbar verdeckt angeordnet, während die sichtbare Oberfläche des an einem Produkt zu befestigenden Sicherungsstreifens vorteilhaft noch in Klarschrift und/ oder in einem maschinenlesbaren Kode Angaben über das Produkt, den Preis oder das Warenhaus enthält. Zum Abschluß des Kaufvorgangs müssen in einem Kassenbereich die auf dem Sicherungsstreifen befindlichen Angaben ausgelesen und die magnetisierbaren Bestandteile des Sicherungsstreifens nach Entrichtung des Kaufpreises deaktiviert werden.

Geräte zum Deaktivieren oder Aktivieren von Sicherungsstreifen sind wie in der DE-OS 30 15 811 angegeben, bisher entweder als Hohlspule ausgebildet, durch die der zur behandelnde Gegenstand hindurchzuführen war, oder sie waren als Platte ausgebildet, über die hinweg der zu behandelnde Gegenstand geführt wird. Derartige Vorrichtungen sind umständlich aufgebaut und sind auch in der Bedienung zeitraubend. Sofern zugleich eine optoelektronische Verbuchung vorgesehen ist, ist die entsprechende Einrichtung als zusätzliches Gerät ebenfalls fest installiert.

Der Erfindung liegt die Aufgabe zugrunde, eine vom Verkäuferpersonal handhabbare Vorrichtung anzugeben, mit der das Ablesen und auch das Aktivieren oder Deaktivieren praktisch in einem Arbeitsgang besonders einfach durchführbar sind.

Die zur Lösung der gestellten Aufgabe wesentlichen, notwendigen Merkmale sind im Patentanspruch 1 genannt. Der Unteranspruch nennt eine vorteilhafte Ausführungsform der Erfindung.

Die Erfindung wird nachfolgend unter Bezug auf die Zeichnung näher erläutert. Dabei zeigt :
Figur 1   eine schematische Darstellung der Vorrichtung ;
Figur 2   eine Aufsicht auf einen magnetisierbare Bestandteile enthaltenden Sicherungsstreifen ;
Figur 3   eine schematische Explosionszeichnung eines Sicherungsstreifens.

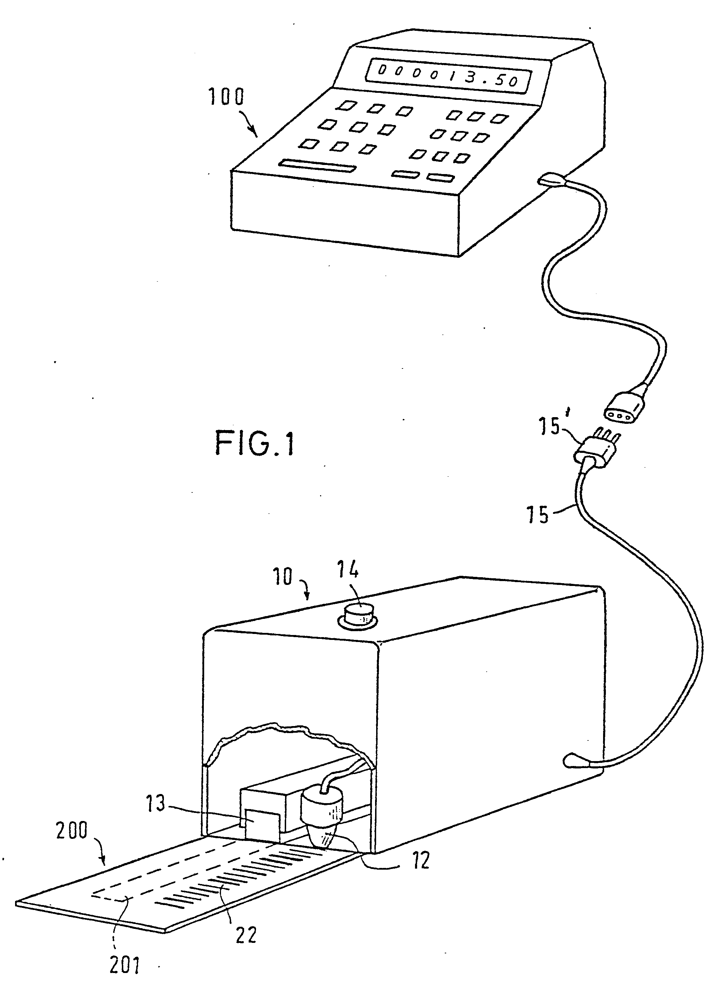

Fig. 1 zeigt in einer schematischen Darstellung eine von Hand betätigbare Vorrichtung 10 zur Aktivierung und/oder Deaktivierung eines magnetisierbare Schichten enthaltenden Sicherungsstreifens mit einer ein elektromagnetisches Feld erzeugenden Einrichtung 13. Die Vorrichtung ist als Handgerät ausgebildet und umfaßt zusätzlich baulich mit der ein Magnetfeld erzeugenden Einrichtung 13 vereinigte optoelektronische Mittel 12 zur Schrift- bzw. Zeichenerkennung.

Über eine Anschlußleitung 15, 15' ist die Vorrichtung 10 mit einem schematisch angedeuteten Kassenterminal 100 verbindbar.

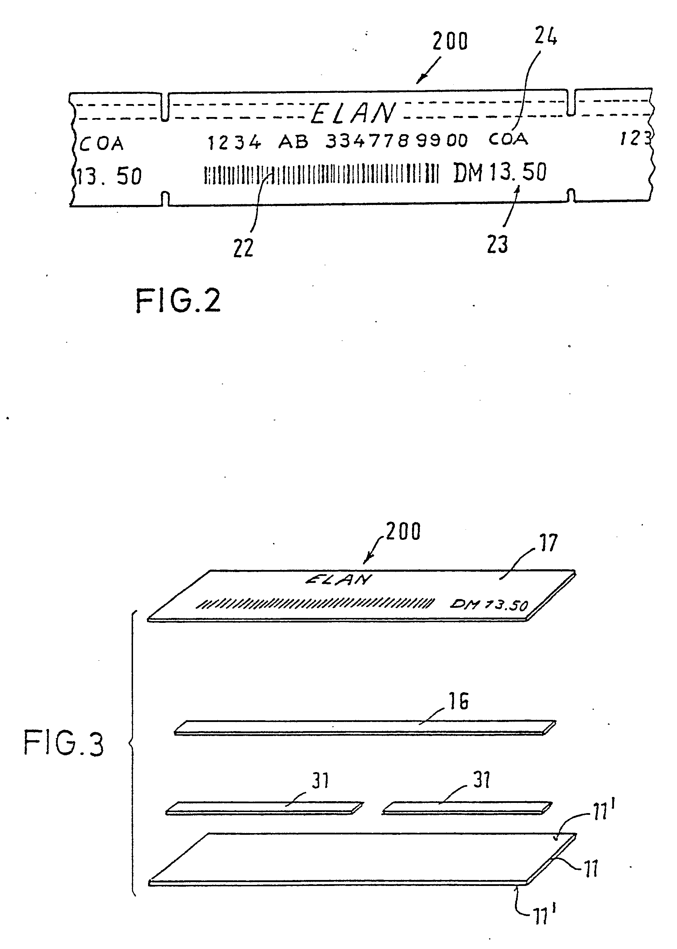

Im Kassenbereich wird die Vorrichtung 10 derart auf dem Sicherungsstreifen 200 aufgesetzt, daß die optoelektroschen Mittel 12 zur Schrift- bzw. Zeichenerkennung auf den auf der äußeren Oberfläche des Sicherungsstreifens 200 sichtbaren Schriftzeichen bzw. Kodierungen 22, 24 (Fig. 1, Fig. 2) aufliegen. Durch die bauliche Vereinigung der optoelektronischen Mittel 12 mit der ein elektromagnetisches Feld erzeugenden Einrichtung 13 kommt diese automatisch über dem Bereich des Sicherungsstreifens 200 zu liegen, in dem von außen unsichtbar die magnetisierbaren Schichten 201 enthalten sind. Durch Betätigung des Schalters 14 wird zunächst ein Auslesevorgang gestartet. Dieser läuft so ab, daß durch in der schematischen Darstellung gem. Fig. 1 nicht dargestellte Mittel, z. B. einen kleinen Elektromotor oder einfach per Hand, die optoelektronischen Mittel 12 mechanisch über den Strichkode 22 hinweggeführt werden und die dort enthaltenen Angaben auslesen und sie in Form elektrischer Impulse über die Anschlußleitung 15, 15' zum Kassenterminal 100 oder zum Rechner weiterleiten. Bei den optoelektronischen Mitteln 12 zum Auslesen von in Klarschrift oder in Kodierung vorliegenden Daten handelt es sich beispielsweise um einen handelsüblichen Lesekopf.

Nach Abschluß des Auslesevorgangs wird zur Deaktivierung des Sicherungsstreifens 200 die Einrichtung 13 in Funktion versetzt, was zur Folge hat, daß ein ursprünglich aufgeprägter Magnetisierungszustand so abgeändert wird, daß im Sicherungsbereich kein Alarm mehr ausgelöst wird.

Dies wird beispielsweise dadurch bewirkt, daß die Einrichtung 13, bei der es sich im einfachsten Fall um eine von einem Wechselstrom durchflossene Spule handelt, kurzzeitig ein elektromagnetisches Feld erzeugt, das auf die magnetisierbaren Schichten 201 des Sicherungsstreifens 200 einwirkt. Die Deaktivierung des Sicherungsstreifens 200 macht es überflüssig, diesen von der gekauften und ordnungsgemäß bezahlten Ware zu entfernen.

Die Ausbildung der Vorrichtung als leicht tragbares Handgerät ermöglich eine rationelle Durchführung des Kaufvorgangs.

Für besondere Anwendungsfälle, z. B. in Bibliotheken, ist es vorteilhaft, den mit einem Buch verbundenen Sicherungsstreifen 200 nach Rückgabe des ausgeliehenen Buches wieder zu aktivieren. Dies ist ohne weiteres möglich, da der Magnetisierungszustand des Sicherungsstreifens beliebig oft veränderbar ist. Auch zur erneuten Aktivierung des Sicherungsstreifens 200 kann die schon beschriebene Vorrichtung eingesetzt werden. Allerdings erzeugt dabei die Einrichtung 13 ein magnetisches Wechselfeld mit höherer Frequenz als beim Deaktivierungsvorgang.

Der Aufbau eines mit der Vorrichtung zusammenwirkenden Sicherungsstreifens 200 wird kurzgefaßt anhand der in Fig. 3 dargestellten Explosionszeichnung erläutert. Der Sicherungsstreifen 200 umfaßt zunächst ein silikonisiertes Trägerband 11 mit beidseitig klebender Folie 11', die nach Abzug des Silikonpapiers auch zur Befestigung des Sicherungsstreifens 200 auf dem jeweiligen Produkt dient.

In einem Schichtaufbau folgen dann Streifen aus hartmagnetischem Material 31 und Streifen aus weichmagnetischem Material 16, die schließlich von einer Deckfolie aus Papier oder Kunststoffband 17 nach außen abgedeckt sind. Die Deckfolie 17 trägt — wie bereits erwähnt — einen zusätzlichen Aufdruck.

Fig. 2 zeigt eine Aufsicht auf einen für die praktischen Belange besonders vorteilhaften Sicherungsstreifen 200. Dieser zeigt einen vorzugsweise auf der äußeren Oberfläche des Deckbandes 17 aufgebrachten Druck mit Angaben über zumindest Art und Preisgruppe der durch den Sicherungsstreifen gesicherten Ware. Diese Angaben können in Klarschrift 24 und/oder in dem heute weitverbreiteten, für automatische Erkennung geeigneten Strichkode 22 aufgebracht werden.

Ein solchermaßen ausgestatteter Sicherungsstreifen erfüllt gleichzeitig mehrere Funktionen. Zum einen sichert er die Ware vor unbefugter Entwendung und reduziert damit die durch Ladendiebstahl hervorgerufenen Verluste, zum anderen ermöglicht er im Kassenbereich oder auch bei Inventuren eine weitgehende automatische Erfassung der Preise und/oder der Warenbestände. Der Sicherungsstreifen ermöglicht eine besonders rationelle Abwicklung des Kaufvorgangs, da in besonders ausgestatteten Kassenbereichen zur Ausstellung des Quittungsbelegs im wesentlichen gleichzeitig Art und Preis der Ware erfaßt und ein Deaktivierungsvorgang durchgeführt werden können. Der Deaktivierungsvorgang beseitigt die alarmauslösenden Eigenschaften des Sicherungsstreifens 200 nach ordnungsgemäßer Entrichtung des Kaufpreises, so daß der ehrliche Kunde den Sicherungsbereich unbehelligt verlassen kann.

**Patentansprüche**

1. Vorrichtung zur Aktivierung und/oder Deaktivierung eines magnetisierbare Schichten enthaltenden Sicherungsstreifens für Diebstahlsicherungssysteme mit einer ein elektromagnetisches Feld erzeugenden Einrichtung, dadurch gekennzeichnet, daß die Vorrichtung (10) in der Weise als Handgerät ausgebildet ist, daß neben der in ihr fest eingebauten ein Aktivierfeld und/oder Deaktivierfeld erzeugenden Einrichtung (13) mit gleicher Wirkrichtung ein parallel zu dieser Einrichtung (13) und zu der nach dem Ansetzen des Handgerätes an dem zu behandelnden Sicherheitsstreifen liegenden Außenfläche des Handgerätes verschiebbares, optoelektronisches Mittel (12) derart angeordnet ist, daß nach Auslösen eines Schalters (14) am Handgerät (10) das optoelektronische Mittel (12) mechanisch, vorzugsweise durch einen Elektromotor, über den Aufdruck auf dem Sicherheitsstreifen, den Auslesevorgang bewirkend, führbar ist, und daß erst danach selbsttätig die das Aktivierfeld und/oder Deaktivierfeld erzeugende Einrichtung (13) in Funktion setzbar ist.

2. Vorrichtung nach Anspruch, dadurch gekennzeichnet, daß die Vorrichtung (10) über eine Anschlußleitung (15, 15') mit einem Kassenterminal (100) oder über eine Adaptereinheit mit einem Rechner verbindbar ist.

**Claims**

1. Apparatus for activating and/or deactivating a safety strip for anti-theft systems and containing magnetizable coatings using a device producing an electromagnetic field, characterized by the fact that the apparatus (10) is formed as a hand held instrument in such a way that as well as a device (13) permanently incorporated therein and producing an activation and/or deactivation field, an opto-electronic means (12) is provided having the same direction of action and movable in parallel to the said device (13) and on that outer surface of the manual instrument which in use bears against the strip to be treated, wherein after the release of a switch (14) on the instrument (10) the optoelectronic means (12) can be guided mechanically, preferably by an electric motor, over the imprint on the safety strip producing a read-out, and that not until then can the device (13) producing the activation and/or deactivation field be set in operation automatically.

2. Apparatus in accordance with Claim 1, characterized by the fact that the apparatus (10) can be connected via a connecting line (15, 15') with a cash register terminal (100) or via an adapter unit with a computer.

**Revendications**

1. Dispositif pour activer et/ou désactiver une étiquette de sécurité comportant des couches magnétisables pour des systèmes de protection contre le vol, comportant un dispositif produisant un champ électromagnétique, caractérisé en ce que le dispositif (10) est réalisé sous la forme d'un appareil à main, qu'on dispose à côté du dispositif (13) produisant un champ d'activation et/ou de désactivation monté fixe dans le dispositif précédent, un moyen opoélectronique (12) pouvant être déplacé parallèlement à ce dispositif (13), avec le même sens d'action, et parallèlement à la surface extérieure de l'appareil à main reposant, après sa mise en place, sur l'étiquette de sécurité à traiter, de telle sorte qu'après le déclenchement d'un interrupteur (14) sur l'appareil à main (10), le moyen optoélectronique (12) peut être guidé mécaniquement, de préférence par un moteur électrique, sur l'impression appliquée sur l'étiquette de sécurité ce qui provoque l'opération de lecture, et en ce que, après cela seulement, le dispositif (13) produisant un champ d'activation et/ou de désactivation peut être mis en fonctionnement.

2. Dispositif selon la revendication 1, caractérisé en ce que le dispositif (10) peut être relié par l'intermédiaire d'une canalisation de raccordement (15, 15') à un terminal de caisse (200) ou par l'intermédiaire d'une unité d'adaptation à un calculateur.

100

FIG.1

15'

15

10

14

13

200

12

22

201

200 24

*ELAN*

COA 1234 AB 3347789900 COA 123

13.50 DM 13.50

22 23

# FIG.2

200 17

*ELAN*

DM 13.50

16

31 31

11'

11

11'

11'

# FIG.3